# EUROPÄISCHE PATENTANMELDUNG

(11) **EP 1 092 881 A2**
(43) Veröffentlichungstag der Anmeldung: **18.04.2001**
(21) Anmeldenummer: 00122516.8
(22) Anmeldetag: 14.10.2000
(51) Int. Cl.: F16B 7/14

(54) **Vorrichtung zum Befestigen oder Verbinden von Bauteilen**

(30) Priorität: 15.10.1999 DE 19949695
(71) Anmelder: HEWI HEINRICH WILKE GMBH, 34454 Bad Arolsen (DE)
(72) Erfinder: Dziuk, Richard, 34454 Bad Arolsen (DE); Römermann, Uwe, 37170 Uslar (DE)
(74) Vertreter: Freiherr von Schorlemer, Reinfried, Dipl.-Phys.

(57) **Zusammenfassung**

Es wird eine Vorrichtung zum Befestigen oder Verbinden von Bauteilen beschrieben, die wenigstens ein Anschlußende (1) mit einer von einer Wand (2) begrenzten Aufnahmeöffnung (3) aufweist. Die Vorrichtung enthält eine zum Einführen in die Aufnahmeöffnung (3) bestimmte Hülse (17) mit einer radialen Aussparung (18), in die ein Verriegelungselement (21) lose eingesetzt ist, das wenigstens einen über den Außenquerschnitt der Hülse (17) radial nach außen abstehenden, zum Eingraben in die Wand (2) bestimmten Widerhaken (25) aufweist, der beim Festziehen des Gewindebolzens (8) in einer zur Fügerichtung entgegengesetzten Richtung wirksam wird. Außerdem ist das Gewindeteil (26) der Hülse (17) vorzugsweise in Fügerichtung federnd nachgiebig ausgebildet, damit der Gewindebolzen (8) ohne Drehbewegung in die Hülse (17) eingeführt werden kann.

## Beschreibung

Die Erfindung betrifft eine Vorrichtung der in den Oberbegriffen der Ansprüche 1 und 17 angegebenen Gattung.

Vorrichtungen dieser Art sind in zahlreichen Ausführungsformen bekannt. Sie dienen vor allem zur Verbindung der Bauteile von baukastenartig aus Rohr- oder Stangen- und Knotenelementen bestehenden Rohr- bzw. Stangensystemen. Aus den Elementen des Baukastens können z.B. Dekorations- oder Möbelgestelle, Messe- und Ausstellungsstände, Rahmen, Pendeltürgriffe, Griffstangen, Möbelstücke, Geländer oder Handläufe und zahlreiche andere Gebilde zusammengesetzt werden. Alternativ können die Vorrichtungen aber auch zur Verbindung anderer Bauteile verwendet werden, sofern diese mit Aufnahmeöffnungen versehene Anschlußenden aufweisen.

Zu Befestigen oder Verbinden von Bauteilen sind Vorrichtungen bekannt, die an Hülsen oder sonstige Kupplungselemente angeformte, nach Art von Widerhaken wirkende und zum Eingraben in die Wand der Aufnahmeöffnung bestimmte Teile aufweisen (GB-PS 1 477 758, US-PS 3 208 409). Die mit derartigen Mitteln herstellbaren Verbindungen sind jedoch für die oben genannten Anwendungszwecke nicht immer ausreichend stabil. Außerdem ist die Herstellung derartiger Hülsen od. dgl., sofern sie aus gehärtetem Stahl bestehen sollen, kompliziert und teuer.

Weiterhin sind Rohrverbinder in Form von Hülsen bekannt, die sowohl innen als auch außen mit radial vorstehenden, aus der Mantelfläche der Hülse herausgestanzten, widerhakenartigen Verriegelungszungen versehen sind (DE 74 17 689 U1). Derartige Hülsen dienen zur Herstellung von Steckverbindungen zwischen zwei Rohren und bieten keine Möglichkeit, die beiden zu verbindenden Rohre mit haarfeinen Stoßfugen aneinanderstoßen zu lassen oder im Bereich des Stoßes axial zu verspannen, wie dies bei den oben genannten Anwendungszwcken meistens erwünscht ist.

Bei einer bekannten Vorrichtung der eingangs bezeichneten Gattung, die diesen Mangel nicht aufweist (DE 26 32 696 C2), besteht die Hülse aus einer in einem Rohr- oder Knotenelement aus Kunststoff angeordneten Metalleinlage. Bei einer weiteren bekannten Vorrichtung dieser Gattung (DE 29 04 776 C2) wird eine Kunststoffhülse durch Kleben, Querstifte, warzenförmige Eindrückungen oder dergleichen in einem Rohrende befestigt. In beiden Fällen sind die Hülsen mit Innengewindeteilen zum Einschrauben eines entsprechenden Gewindebolzens versehen und fest in einer Aufnahmeöffnung des jeweiligen Bauteils befestigt.

Daneben sind Vorrichtungen der eingangs bezeichneten Gattung bekannt (DE 40 30 978 C2), bei denen die Hülse aus einem aus Kunststoff oder Metall bestehenden Spreizteil mit einem konischen Außenmantel besteht, das zum radialen Spreizen eines zusätzlich in die Aufnahmeöffnung eingelegten, spreizbaren Teils dient, um dieses von innen fest gegen die Wand der Aufnahmeöffnung zu pressen und dadurch im Bauteil durch Klemmwirkung zu befestigen.

Vorrichtungen dieser Art dienen überwiegend zur Verbindung von zwei rohrförmigen Bauteilen. Sie können aber auch z.B. zur Befestigung eines Rohrelements oder dergleichen an einer Rosette oder dergleichen dienen. Dabei ist z.B. das spreizbare Teil der zuletzt genannten Vorrichtung fest mit der Rosette verbunden und mittels einer von deren Rückseite her eingeführten Schraube in der Aufnahmeöffnung eines Rohrelement oder dergleichen durch Klemmwirkung festlegbar (EP 0 477 713 B1).

Ein Problem der zuletzt beschriebenen Vorrichtungen besteht darin, daß sie konstruktiv vergleichsweise aufwendig und dadurch teuer sind. Sie stellen wegen der Vielzahl der Vorrichtungen, die zur Herstellung eines Gestells, Geländers, Handlaufs oder dergleichen benötigt werden, einen beträchtlichen Kostenfaktor dar.

Ein weiteres Problem dieser Vorrichtungen besteht darin, daß die Gewindebolzen eine vergleichsweise große Länge besitzen und vergleichsweise tief in die Hülsen eingeschraubt werden müssen. Das Eindrehen und Festziehen der Bolzen bis zum Erreichen der gewünschten Montagestellung muß daher mit einer Vielzahl von Umdrehungen erfolgen, was die Montagezeit erhöht und insbesondere dann unerwünscht ist, wenn die Montage nicht im Werk, sondern an einer Baustelle erfolgen soll.

Vor diesem Hintergrund liegt der Erfindung die Aufgabe zugrunde, die Vorrichtung der eingangs bezeichneten Gattung so auszubilden, daß wenigstens eines der beiden Probleme gelöst und eine Vorrichtung erhalten wird, die einfacher hergestellt und/oder montiert werden kann.

Zur Lösung dieser Aufgabe dienen die kennzeichnenden Merkmale der Ansprüche 1 und 17.

Die Erfindung bringt den Vorteil mit sich, daß einerseits zur Herstellung der Vorrichtung einfache, preisgünstige Bauelemente verwendet werden können, andererseits die Festlegung der Hülse in der Aufnahmeöffnung mit wenigen Umdrehungen des Gewindebolzens erreicht wird.

Weitere vorteilhafte Merkmale der Erfindung ergeben sich aus den Unteransprüchen.

Die Erfindung wird nachfolgend in Verbindung mit den beiliegenden Zeichnungen an Ausführungsbeispielen näher erläutert. Es zeigen:
Fig. 1 einen Axialschnitt durch ein Rohrelement, das mit einem ersten Ausführungsbeispiel der erfindungsgemäßen Vorrichtung versehen ist;
Fig. 2 einen Schnitt längs der Linie II -II der Fig. 1;
Fig. 3 eine Hülse der Vorrichtung nach Fig. 1 in einem aufgeklappten Zustand;
Fig. 4 und 5 je eine perspektivische Ansicht eines Zahnkeils der Vorrichtung nach Fig. 1 bis 3 aus unterschiedlichen Blickrichtungen und in einem vergrößerten Maßstab;
Fig. 6 bis 8 je eine Vorderansicht, Draufsicht und Seitenansicht (von links in Fig. 7) des Zahnkeils nach Fig. 4 und 5;
Fig. 9 einen Axialschnitt durch ein Rohrelement, das mit einem zweiten Ausführungsbeispiel der erfindungsgemäßen Vorrichtung versehen ist;
Fig. 10 eine perspektivische Unteransicht einer Tellerfeder der Vorrichtung nach Fig. 9 in vergrößertem Maßstab;
Fig. 11 und 12 eine Draufsicht auf einen ersten Abschnitt einer Hülse der Vorrichtung nach Fig. 9 sowie einen Schnitt längs der Linie XII-XII der Fig. 11;
Fig. 13 und 14 eine Draufsicht auf die Tellerfeder nach Fig. 10 und einen Schnitt längs der Linie XIV - XIV der Fig. 13;
Fig. 15 und 16 eine Draufsicht auf einen zweiten Abschnitt einer Hülse der Vorrichtung nach Fig. 9 sowie einen Schnitt längs der Linie XVI - XVI der Fig. 15;
Fig. 17 einen Axialschnitt durch ein Rohrelement, das mit einem dritten Ausführungsbeispiel der erfindungsgemäßen Vorrichtung versehen ist;
Fig. 18 eine Hülse der Vorrichtung nach Fig. 17 im aufgeklapptem Zustand;
Fig. 19 und 20 je eine Draufsicht und Seitenansicht einer Blattfeder der Vorrichtung nach Fig. 17; und
Fig. 21 und 22 je eine Draufsicht und Seitenansicht einer Klappmutter der Vorrichtung nach Fig. 17 und 18 in einem gegenüber Fig. 17 vergrößertem Maßstab.

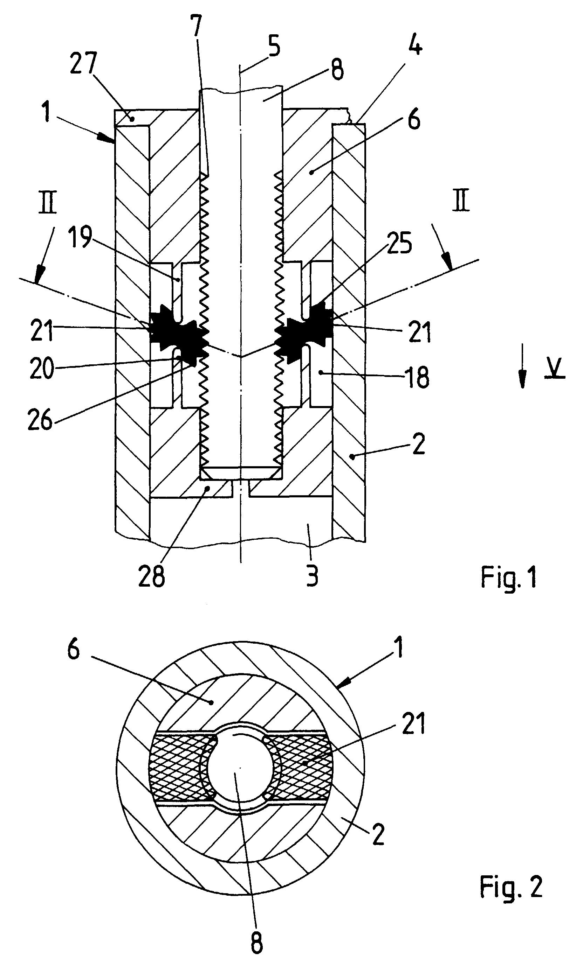

Fig. 1 und 2 zeigen ein Bauteil mit wenigstens einem Anschlußende 1, das eine von einer Wand 2 umgebene Aufnahmeöffnung 3 aufweist, die an einer Stirnseite 4 des Bauteils endet. Bei Anwendung der Erfindung auf übliche Rohr- oder Stangensysteme besteht das Bauteil z.B. aus einem aus Stall hergestellten Rohr und das Anschlußende 1 aus einem Ende dieses Rohrs. Das Rohr kann dabei in an sich bekannter Weise mit einer nicht dargestellten, das Rohrende etwas überragenden Kunststoffummantelung versehen sein. Die Aufnahmeöffnung 3 ist in diesem Fall z.B. zylindrisch und weist eine Längsachse 5 auf.

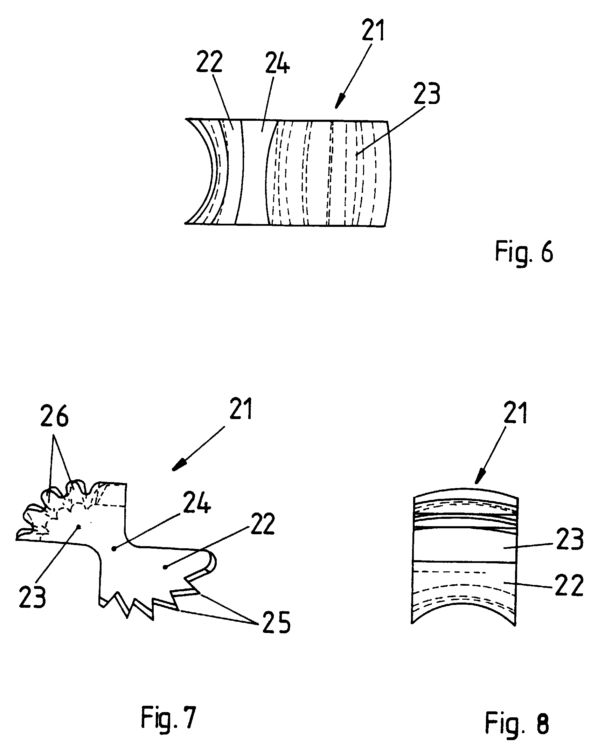

Zur Verbindung des Bauteils mit einem anderen Bauteil ist erfindungsgemäß eine Vorrichtung nach Fig. 1 bis 8 vorgesehen, die eine zum Einsetzen in die Aufnahmeöffnung 3 bestimmte Hülse 6 und einen in diese einschraubbaren, mit einem Außengewinde 7 versehenen Gewindebolzen 8 enthält. Wie insbesondere Fig. 1 bis 3 zeigen, besteht die Hülse 6 nach einem ersten Ausführungsbeispiel aus einer zylindrischen Hülse, deren Außenquerschnitt im wesentlichen dem Durchmesser der Aufnahmeöffnung 3 und deren Innendurchmesser im wesentlichen dem Durchmesser des Gewindebolzens 8 entspricht. In einem mittleren Bereich ist die Hülse 6 mit wenigstens einer ihren Mantel durchsetzenden, radialen Ausparung 18 versehen, in die von gegenüberliegenden Seiten her wenigstens zwei federnd ausgebildete, zur Längsachse 5 im wesentlichen parallele Schenkel 19,20 ragen, deren Enden sich mit geringen Abstand gegenüberstehen. Im Ausführungsbeispiel ist die Hülse 6 quer zur Längsachse 5 durchragende Ausparung 18 vorgesehen, in die beidseitig der Längsachse 5 und an zwei diametral gegenüberliegenden Stellen je ein Paar von sich gegenüberstehenden Schenkeln 19,20 ragt.

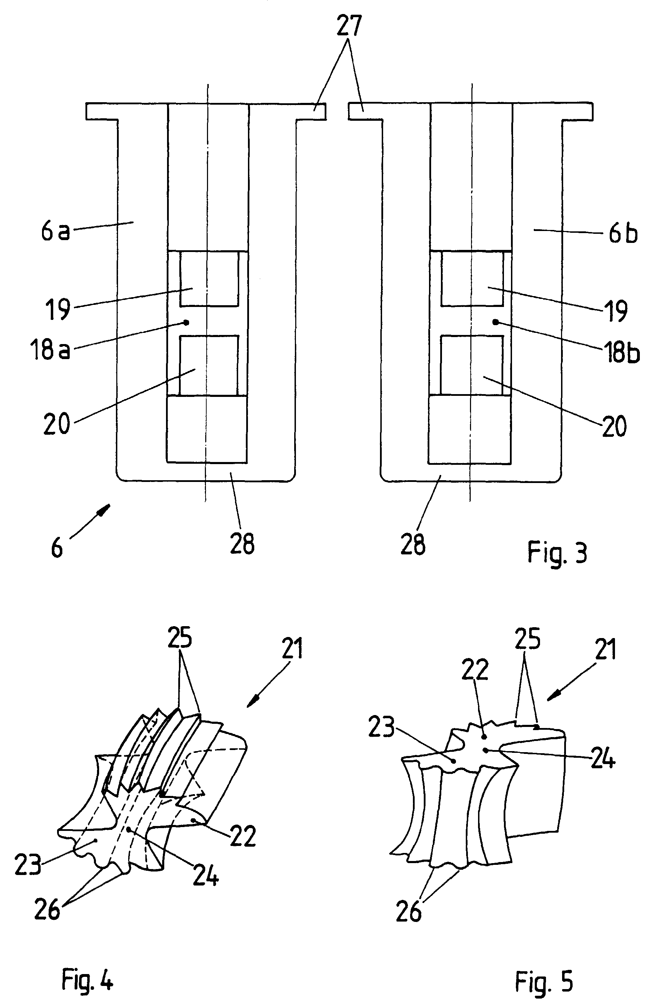

In den Zwischenräumen zwischen den Schenkeln 19,20 sind nach Fig. 1 und 2 Verriegelungselemente in Form von starren, lose zwischen die Schenkel 19,20 eingesetzten Zahnkeilen 21 schwenkbar gelagert, deren Form aus Fig. 4 bis 8 ersichtlich ist. Danach hat jeder Zahnkeil 21 Endabschnitte 22 und 23 und eine zwischen diesen angeordnete, von beiden Seiten her angearbeitete Verjüngung bzw. Einschnürung 24, die konkave Ausnehmungen bildet, in die bei der Montage nach Fig. 1 und 2 die Enden der paarweise gegenüberliegenden Schenkel 19,20 so eingelegt werden, daß die Zahnkeile 21 in den Zwischenräumen zwischen diesen nach Art von Schwenkhebeln um Achsen schwenkbar gelagert sind, die im wesentlichen senkrecht zur Längsachse 5 stehen.

Die Zahnkeile 21 sind an den Außenseiten ihrer Endabschnitte 22 mit wenigstens einem, vorzugsweise mit mehreren ersten Zähnen 25 versehen, die als entgegengesetzt zur Fügerichtung (Pfeil v) wirkende Widerhaken dienen. An den Außenseiten der Endabschnitte 23 weisen die Zahnkeile 21 dagegen wenigstens einen zweiten Zahn 26 auf, der zum Eindrehen des Gewindebolzens 8 dient, in dessen Gewindegänge paßt und als Innengewindeabschnitt der Hülse 6 wirken kann.

Im montierten Zustand ist jeder Zahnkeil 21 so zwischen den zugehörigen Schenkeln 19,20 angeordnet, daß die Endabschnitte 22 und ersten Zähne 25 radial außen, die Endabschnitte 23 und zweiten Zähne 26 dagegen radial innen liegen. Dabei ist die Anordnung so getroffen, daß der maximale Abstand der Spitzen der ersten und zweiten Zähne 25,26 etwas größer ist, als dem Abstand der Wand 2 vom Gewindebolzen 8 im montierten Zustand entspricht, so daß die Zähne 25 und 26 selbst dann etwas über die Hülse 6 nach innen bzw. außen vorstehen können, wenn die Zahnkeile 21 nahezu radial angeordnet sind.

Die Hülse 6 weist an ihren axialen Enden je ein erstes, radial nach außen ragendes Anschlagelement 27 und ein zweites, radial nach innen ragendes Anschlagelement 28 auf.

Nach einer bevorzugten Ausführungsform der Erfindung besteht die Hülse 6, wie Fig. 3 zeigt, aus zwei identischen Halbschalen 6a und 6b, die je eine die Ausparrung 18 bildende Ausparung 18a, 18b und ein Paar von in diese ragende Schenkel 19,20 aufweisen und längs einer Trennfläche getrennt sind, die im wesentlichen parallel zur Längsachse 5 verläuft. Alternativ könnten drei oder mehr Schalen und entsprechend drei oder mehr Zahnkeile 21 vorgesehen sein. Die vorhandenen Abschnitte 18a, 18b können durch dünne, scharnierartige Stege und gegebenenfalls ein Klebeband oder dergleichen zusammengehalten sein.

Die Vorrichtung nach Fig. 1 bis 8 wird im wesentlichen wie folgt angewendet: Die mit den Zahnkeilen 21 versehene Hülse 6 wird mit dem Anschlagelement 28 voran in die Aufnahmeöffnung 3 eingeführt, bis das Anschlagelement 27 an dessen äußerer Stirnseite anliegt. Anschließend wird der Gewindebolzen 8 ohne Drehbewegung in die Hülse 6 gesteckt, bis er am Anschlagelement 28 anliegt. Der Gewindebolzen 8 wird dabei zwischen den zweiten, radial innen liegenden Zähnen 26 durchbewegt, die in Richtung des Pfeils v federnd ausweichen, weil die Zahnkeile 21 bei dieser Schwenkbewegung die federnd ausgebildeten Schenkel 19,20 mitnehmen können. So wird z.B. in Fig. 1 der links dargestellte Zahnkeil 21 im Uhrzeigersinn verschwenkt, wobei das untere Ende des Schenkels 19 radial nach innen und das obere Ende des Schenkels 20 radial nach außen gedrückt wird. Nach der Einführung des Gewindebolzens 8 schwenken die Schenkel 19,20 die Zahnkeile 21 in die aus Fig. 1 und 2 ersichtliche Stellung zurück, wodurch die ersten Zähne 25 an die Wand 2 gelegt werden, während die zweiten Zähne 26 in die Gewindegänge des Gewindebolzens 8 eintreten. Abschließend wird der Gewindebolzen 8 in Festdrehrichtung angezogen, wodurch die starren, vorzugsweise aus gehärtetem Stahl bestehenden Zahnkeile 21 noch stärker verschwenkt werden und sich die ersten Zähne 25 nach Art von Widerhaken in die Wand 2 eingraben. Durch entsprechende Bemessung der verschiedenen Teile kann erreicht werden, daß bereits mit sehr wenigen, z. B. zwei oder drei Umdrehungen des Gewindebolzens 8 ein fester Sitz der Hülse 6 im Anschlußende 1 erreicht wird und die Zahnkeile 21 in Fig. 1 maximal etwa eine horizontale Lage quer zur Längsachse 5 einnehmen können, wenn der Gewindebolzen 8 festgezogen ist.

Der Gewindebolzen 8 weist beispielsweise einen nicht gezeigten, mittels eines Werkzeugs betätigbaren Schraubenkopf auf. Bei der Drehbewegung in Festdrehrichtung stützt sich sein freies Ende am Anschlagelement 28 ab, während gleichzeitig die Zähne 26 in die Gewindegänge des Gewindes 7 des Bolzens 8 eintreten und in diesen in Fig. 1 nach oben wandern. Hierdurch besteht das Bestreben, die Hülse 6 entgegen der Fügerichtung (Pfeil v) aus der Aufnahmeöffnung 3 herauszuziehen, d. h. auf Zug zu belasten. Das hat aber zur Folge, daß sich die Widerhakenspitzen der ersten Zähne 25, die beim Einführen des Gewindebolzens 8 immer stärker an die Wand 2 der Aufnahmeöffnung 3 gedrückt werden, allmählich in diese eingraben und dadurch derartige axiale Bewegungen der Hülse 6 verhindern. Durch geeignete Dimensionierung der verschiedenen Teile kann erreicht wreden, daß ein Lösen der auf diese Weise hergestellten Verbindung entgegengesetzt und zum Pfeil v ohne vorheriges Losdrehen des Gewindebolzens 8 nicht mehr möglich ist.

Alternativ wäre es möglich, den Gewindebolzen 8 zunächst in einem dem Anschlußende 1 nach Fig. 1 und 2 entsprechenden Anschlußende eines zweiten Bauteils zu befestigen und dann nur so weit in die Aufnahmeöffnung 3 einzufügen, daß sein freies Ende das Anschlußelement 28 nicht berührt. In diesem Fall wird das zum Festziehen der Verbindung benötigte axiale Widerlager dadurch geschaffen, daß sich das andere Bauteil in Fig. 1 von oben her auf die Stirnseite 4 bzw. das Anschlagelement 27 auflegt. Wird das zweite Bauteil dann gedreht, wandern die zweiten Zähne 26 analog zur obigen Beschreibung in den Gewindegängen des Bolzens 8 in einer zum Pfeil v entgegengesetzten Richtung, wodurch die Verbindung festgezogen wird.

In analoger Weise kann schließlich vorgegangen werden, wenn der Bolzen 8 undrehbar z. B. von einer Wand oder vom Boden od. dgl. absteht und dazu dient, das Bauteil an der Wand oder am Boden zu befestigen. In diesem Fall wird das Anschlußende 1 mit seiner Aufnahmeöffnung 3 auf den Gewindebolzen 8 aufgesteckt und dann durch Drehen des gesamten Bauteils auf diesem befestigt. Dabei kann sich entweder das Bauteil mit seiner Stirnfläche 4 an der Wand bzw. am Boden oder der Bolzen 8 am Anschlag 28 abstützen.

Die Zahnkeile 21 bestehen vorzugsweise aus einem gehärteten Stahl, der härter als das Material ist, aus dem die die Aufnahmeöffnung 3 umgebende Wand 2 hergestellt ist.

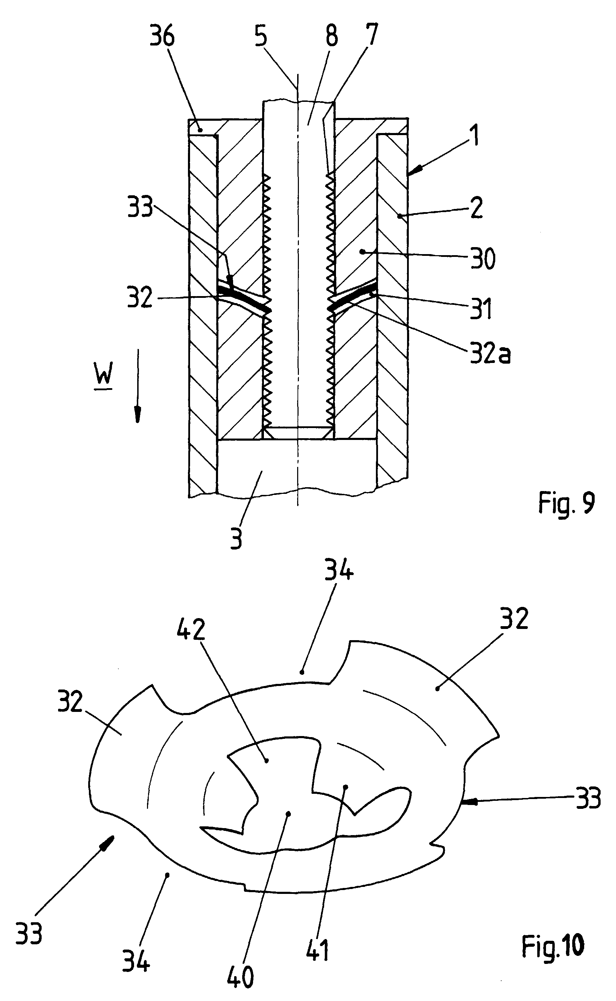

Die Ausführungsbeispiele nach den Fig. 9 bis 22 beruhen auf demselben Wirkungsprinzip wie das Ausführungsbeispiel nach Fig. 1 bis 8 und werden nachfolgend erläutert, wobei gleiche Teile mit denselben Bezugszeichen versehen werden.

Beim Ausführungsbeispiel nach Fig. 9 bis 16 ist eine Hülse 30 vorgesehen, deren Außendurchmesser im wesentlichen dem Durchmesser der Aufnahmeöffnung 3 und deren Innendurchmesser im wesentlichen dem Durchmesser des Bolzens 3 entspricht. Die Hülse 30 weist in einem mittleren Bereich wenigstens eine, ihren Mantel durchsetzende,Aussparung in Form eines radialen Schlitzes 31 auf, durch den ein erstes, radiales, nach außen ragendes Segment 32 (Fig. 10) einer vorzugsweise aus gehärtetem Stahl bestehenden, lose eingesetzten Tellerfeder 33 ragt. Das radial äußere Ende 32a des Segments 32 ist scharfkantig ausgebildet und wirkt in einer zur Fügerichtung (Pfeil w in Fig. 9) entgegengesetzten Richtung analog zu den Zähnen 25 (Fig. 1) als Widerhaken. Im Ausführungsbeispiel (Fig. 10) weist die Tellerfeder 33 drei Segmente 32 auf, die kreissegmentartig angeordnet und in Umfangsrichtung durch Randausschnitte 34 beabstandet sind. Entsprechend weist das Einlegeteil 30 drei Schlitze 31 auf.

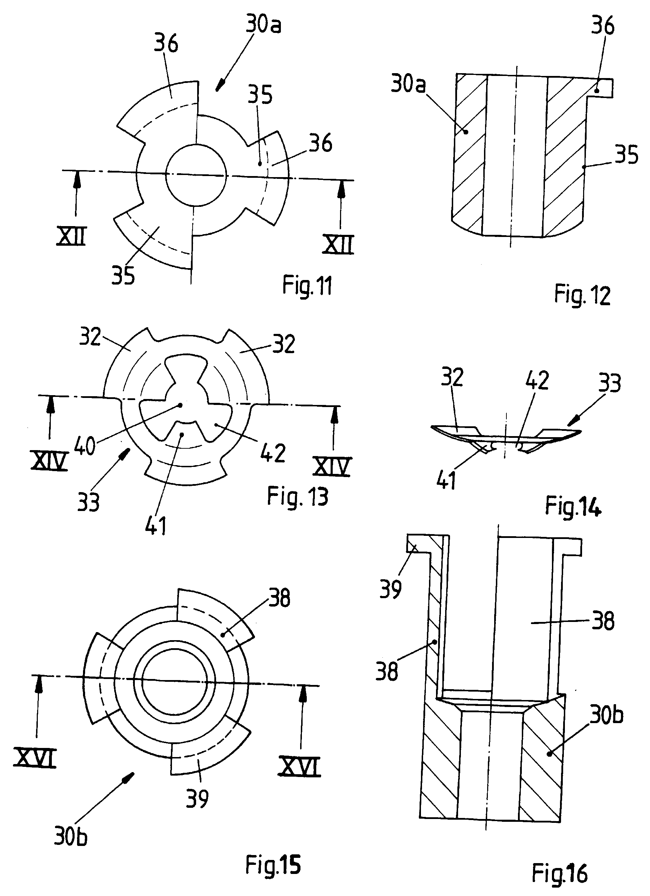

Zur Vereinfachung der Herstellung besteht das Einlegeteil 30 nach Fig. 11 und 12 bzw. 15 und 16 vorzugsweise aus zwei die Schlitze 31 bildenden Abschnitten 30a und 30b, die längs einer im wesentlichen senkrecht zur Längsachse 5 verlaufenden Fläche getrennt sind und zwischen denen die Tellerfeder 33 zu liegen kommt. Der Abschnitt 30a ist durchgehend als Hülse ausgebildet und am Umfang mit drei radial nach außen ragenden, achsparallelen Rippen 35 versehen, die an ihren in Fig. 11,12 oberen Enden mit um ca. 90° nach außen ragenden Ansätzen 36 versehen sind. Der Innendurchmesser der Hülse entspricht im wesentlichen dem Durchmesser des Gewindebolzens 8, während der Durchmesser der von den Außenflächen der Rippen 36 gebildeten Zylinderfläche im wesentlichen dem Innendurchmesser der Aufnahmeöffnung 3 entspricht. Dagegen ist der Abschnitt 30b in einem in Fig. 15,16 unteren Teil hülsenförmig ausgebildet, wobei sein Innendurchmesser im wesentlichen dem Außendurchmesser des Bolzens 8 und sein Außendurchmesser im wesentlichen dem Durchmesser der Aufnahmeöffnung 3 entspricht. Das in Fig. 16 obere Teil dieses Abschnitts 30b ist dagegen durch drei zu einer Längsachse 37 parallele Segmente 38 gebildet, die längs Zylinderabschnitten verlaufen und in Umfangsrichtung um ein Maß beabstandet sind, das der in Umfangsrichtung gemessenen Breite der Rippen 35 des Abschnitts 30a entspricht. Der Durchmesser der von den Außenflächen der Segmente 38 definierten Zylinderfläche entspricht im wesentlichen dem Durchmesser der Aufnahmeöffnung 3. Der Innendurchmesser des von den Segmenten 38 begrenzten Hohlzylinders entspricht dem zwischen den Rippen 35 gemessenen Durchmesser des Abschnitts 30a, so daß dieser in Fig. 16 von oben her axial in den Abschnitt 30b eingeführt werden kann, wobei die Rippen 35 in die Freiräume zwischen den Segmenten 38 treten. An den in Fig. 16 oberen Enden weisen die Segmente 38 radial nach außen ragende Ansätze 39 auf, die nach dem Einführen des Abschnitts 30a in den Abschnitt 30b zwischen den Ansätzen 36 zu liegen kommen und mit diesen ein erstes Anschlagelement bilden. Das zweite Anschlagelement kann bei dieser Ausführungsform analog zum Anschlagelement 28 (Fig. 1) ausgebildet sein.

Die Tellerfeder 33 weist im Ausführungsbeispiel drei Segmente 32 auf (Fig. 10,13,14), die von oben her so in den Abschnitt 30b eingeführt werden können, das die Segmente 32 in einem Schlitz zwischen je zwei Segmenten 38 und dem Abschnitt 30a zuliegen kommen. In ihrem Zentrum weist die Tellerfeder 33 ein Mittelloch 40 für den Gewindebolzen 8 auf, dessen Rand durch drei Lappen 41 begrenzt ist, die durch im Mittelteil der Tellerfeder 33 angebracht, kreissegmentförmige Ausschnitte 42 gebildet sind. Wie insbesondere Fig. 9 und 14 zeigen, sind vorzugsweise die Lappen 41 leicht schräg in Fügerichtung (Pfeil w in Fig. 9), die Segmente 32 dagegen leicht in der dazu entgegengesetzten Richtung geneigt. Außerdem ist der Durchmesser des von den Lappen 41 begrenzten Innenkreises vorzugsweise etwas kleiner als der Durchmesser des Gewindebolzens 8, der Durchmesser des von den äußeren Enden der Segmente 32 gebildeten Kreises dagegen vorzugsweise etwas größer als der Durchmesser der Aufnahmeöffnung 3.

Die Hülse 30 wird zweckmäßig vormontiert, indem zunächst die Tellerfeder 33 und dann der Abschnitt 30a in den Abschnitt 30b eingelegt wird. Nach dieser Montage ragen die äußeren Enden der Segmente 32 der Tellerfeder 33 etwas über den Außenumfang der Abschnitte 30a,30b radial nach außen und die äußeren Enden der Lappen 41 der Tellerfeder 33 etwas über den Innenumfang der Abschnitte 30a,30b hinaus radial nach innen. Dabei können die Unterseite des Abschnitts 30a und die Oberseite des hülsenförmigen Teils des Abschnitts 30b derart mit konischen oder abgestuften Flächen versehen sein, das im montierten Zustand ausreichend große, zum Durchtritt der Segmente 32 der Tellerfeder 33 geeignete Schlitze 31 (Fig. 9) erhalten werden. Außerdem wäre es möglich, die Abschnitte 30a,30b nach dem Zusammenfügen durch Kleben oder sonstwie zu einer festen Baueinheit miteinander zu verbinden. Schließlich ist klar, daß die jeweils drei Segmente 32 und 38, Rippen 35 und Lappen 41 nur Beispiele darstellen und deren Form und Anzahl auch anders gewählt sein kann.

Die Anwendung der Vorrichtung nach Fig. 9 bis 16 erfolgt analog zum vorhergehenden Beispiel dadurch, daß zunächst die Hülse 30 in die Aufnahmeöffnung 3 und dann der Bolzen 8 ohne Drehbewegung in die Hülse 30 gesteckt wird. Dabei können sowohl die Segmente 32 als auch die Lappen 41 der Tellerfeder 33 federnd nachgeben, bis die Anordnung nach Fig. 9 erreicht ist. Beim nachfolgenden Festziehen des Gewindebolzens 8 wandern die Lappen 41 in dessen Gewindegängen entgegengesetzt zum Pfeil w nach oben, wodurch sich gleichzeitig die widerhakenartig wirkenden Außenkanten 32a der Segmente 32 der Tellerfeder 33 in die Wand 2 eingraben und ggf. auf die unteren, die Schlitze 31 begrenzenden Wandungen auflegen. Mit nur wenigen Umdrehungen des Gewindebolzens 8 wird auch bei diesem Ausführungsbeispiel ein fester Sitz der Vorrichtung in der Aufnahmeöffnung 3 bewirkt.

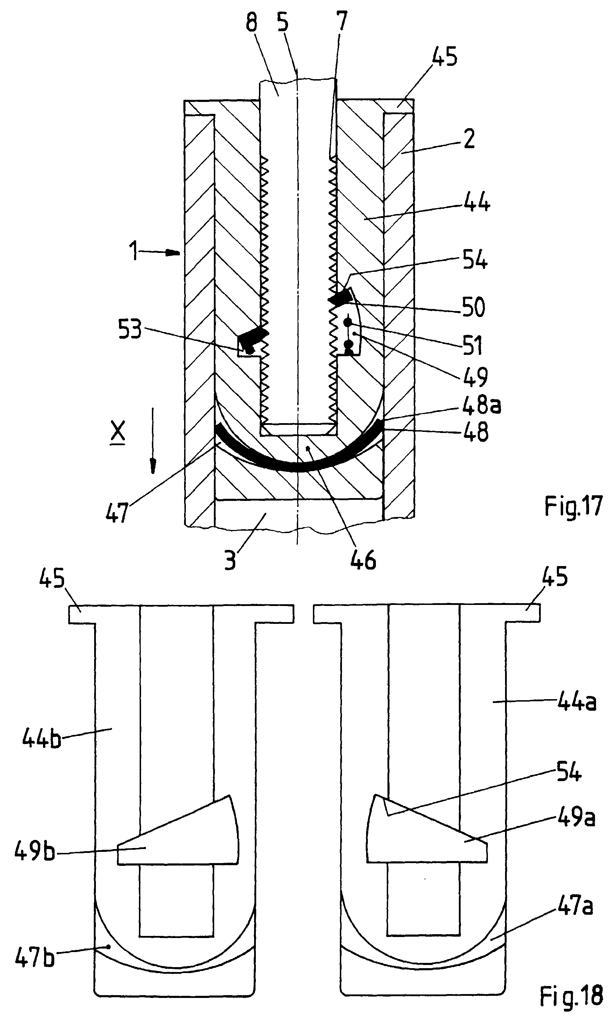

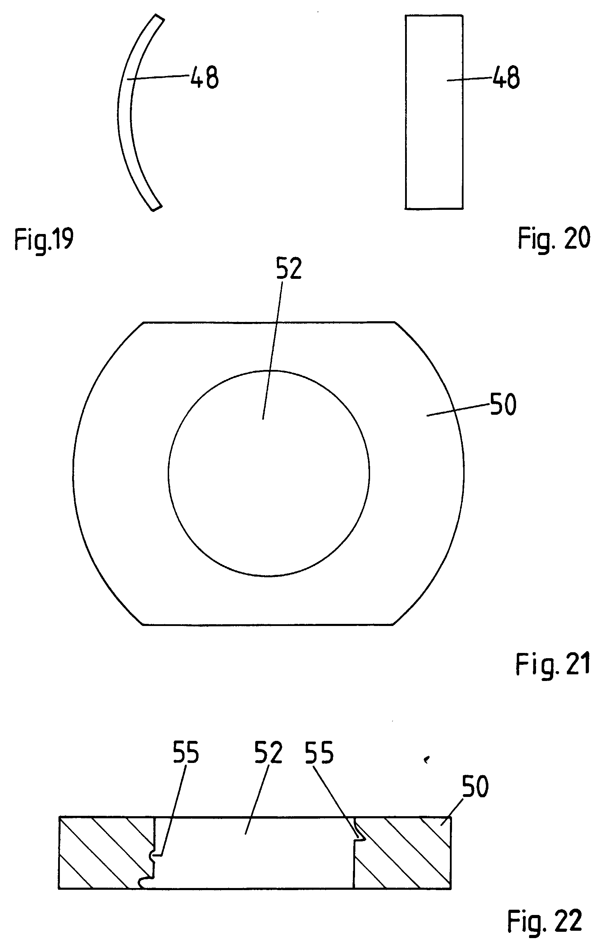

Das Ausführungsbeispiel nach Fig. 17 bis 22 weist eine Hülse 44 auf, die analog zur Fig. 3 aus zwei Hälften 44a,44b (Fig. 18) besteht, die längs einer im wesentlichen parallel zur Längsachse 5 verlaufenden Trennfläche getrennt sind. Die Hälften 44a,44b weisen am einen Ende jeweils ein radial nach außen ragendes Anschlagelement 45 und am entgegengesetzten Ende ein zweites Anschlagelement 46 in Form eines Bodens auf. In diesem Boden ist außerdem je eine Nut 47a,47b ausgebildet, die im zusammengelegten Zustand der Abschnitte 44a,44b einen die Hülse 44 radial durchragenden Schlitz 47 (Fig. 17) bilden. In die Nuten 47a,47b wird vor dem Verbinden der Abschnitte 44a,44b ein Verriegelungselement in Form einer vorzugsweise aus gehärtetem Stahl bestehende Blattfeder 48 eingelegt, deren Länge etwas größer ist, als der Länge der Nuten 47a,47b bzw. des Schlitzes 47 entspricht, so daß sie mit ihren scharfkantigen, als Widerhaken wirksamen Enden 48a etwas seitlich aus diesen herausragt. Die Form der Aussparung bzw. des Schlitzes 47 ist, vom Anschlagelement 45 her betrachtet, etwas konkav gewölbt, und die Blattfeder 48 ist gemäß Fig. 17, 19 entsprechend konkav geformt. Außerdem sind die an dem Außenmantel der Hülse 44 grenzenden Zonen des Schlitzes 47, wie Fig. 17, 18 zeigen, in axialer Richtung etwas konisch aufgeweitet. Wird daher die aus den Abschnitten 44a,44b und der Blattfeder 48 bestehende, vormontierte Hülse 44 in Fügerichtung (Pfeil x in Fig. 17) in die Aufnahmeöffnung 3 eingeschoben, können die Enden der Blattfeder 48 in einer zum Pfeil x entgegengesetzten Richtung federnd ausweichen. Soll danach die Hülse 44 entgegen dem Pfeil x bewegt und auf Zug beansprucht werden, graben sich die scharfen Kanten der Enden 48a der Blattfeder 48 in die Wand 3 ein, wobei sie höchstens soweit ausweichen können, bis sie am Boden des Schlitzes 47 anliegen.

Im Gegensatz zu den beiden bisher beschriebenen Ausführungsbeispielen werden beim Ausführungsbeispiel der Fig. 17 bis 22 die Funktionen der Widerhaken einerseits und des vereinfachten Einsteckens des Gewindebolzens 8 andererseits nicht mit denselben Elementen (z. B. 21,33 in Fig. 1 und 9), sondern mit voneinander unabhängigen, unterschiedlichen Elementen der Hülse 44 realisiert. Hierzu weist die Hülse 44 in einem zwischen den Anschlagelementen 45,46 liegenden Bereich einen von Aussparungen 49a,49b in den Abschnitten 44a,44b gebildeten Hohlraum 49 auf, in den eine in Fig. 21,22 vergrößert dargestellte Klappmutter 50 und eine Vorspannfeder 51 eingelegt werden. Dabei wird durch eine entsprechende Formgebung des Hohlraums 49 und der Vorspannfeder 51 dafür gesorgt, daß die Klappmutter 50 normalerweise so angeordnet ist (Fig. 17), daß die durch ihr Mittelloch 52 (Fig. 21,22) verlaufende Achse einen Winkel mit der Längsachse 5 der Hülse 44 bildet. Hierzu weist z.B. der Hohlraum 49 gemäß Fig. 17 einen etwa dreieckförmigen Querschnitt auf, in dessen einer Ecke 53 (in Fig. 17 links) das eine seitliche Ende der Klappmutter 50 schwenkbar gelagert ist, während ein diametral gegenüberliegendes Ende der Klappmutter 50 an einer Anschlagfläche 54 anliegt. Außerdem sind die an das Mittelloch 52 grenzenden Gewindegänge 55 (Fig. 22) in dieser Schräglage genau koaxial zur Längsachse 5 ausgerichtet, so daß der Gewindebolzen 8 in dieser Schräglage in die Klappmutter 50 eingeschraubt werden kann (Fig. 17).

Soll der Gewindebolzen 8 analog zu den anderen Ausführungsbeispielen ohne Drehbewegung in die Klappmutter 50 eingeführt werden, ist es lediglich erforderlich, ihn axial fest gegen diese zu drücken. Die Klappmutter 50 wird dann um das in der Ecke 53 liegende Ende unter Zusammendrücken der Vorspannfeder 51 in Richtung des Pfeils x verschwenkt, wodurch sich das Mittelloch 52 für den Bolzen 8 weiter öffnet und dieser jetzt ohne Drehbewegung bis zum zweiten Anschlagelement 46 durchgeschoben werden kann. Danach gelangt die Klappmutter 50 unter dem Einfluß der Vorspannfeder 51 wieder in die aus Fig. 17 ersichtliche Position, so daß das Gewinde des Gewindebolzens 8 jetzt in deren Gewindegänge 55 eingreift und in dieser Festdrehrichtung gedreht werden kann, um die beschriebene Vorrichtung in der Aufnahmeöffnung 3 zu fixieren.

Im übrigen ist die Hülse 44 nach Fig. 17 bis 22 analog zu den anderen beschriebenen Hülsen so ausgebildet, daß ihr Außendurchmesser etwa dem Durchmesser der Aufnahmeöffnung 3 und sein Innendurchmesser etwa dem Bolzendurchmesser entspricht.

Die beiden Abschnitte der Hülsen 17, 30 und 44 werden vorzugsweise aus Kunststoff durch Spritzguß hergestellt. Dagegen werden die Widerhaken aufweisenden Teile vorzugsweise aus gehärtetern Stahl und insbesondere aus Materialien hergestellt, die härter als das Material ist, aus dem die Wand 2 der Aufnahmeöffnung 3 besteht. Dadurch wird sichergestellt, daß die Widerhaken nicht allein durch Klemmung, sondern dadurch wirksam werden, daß sie in das Wandmaterial eindringen, sich in diesem verhaken und nur mit Gewalt bzw. durch Ausübung großer Zugkräfte und Zerstörung des Wandmaterials aus der Aufnahmeöffnung 3 herausgezogen werden können.

Alle beschriebenen Ausführungsbeispiele bringen den Vorteil mit sich, daß sie aus einfach und preisgünstig herstellbaren und leicht fügbaren Teilen zusammengesetzt sind und das weder zum Festziehen der Verbindung noch zum ersten Eindrehen der Gewindebolzen in die Hülsen eine Drehbewegung der Gewindebolzen erforderlich ist. Dadurch können die gewünschten Verbindungen bzw. Befestigungen schnell und ohne großen Montageaufwand hergestellt werden.

Die Erfindung ist nicht auf die beschriebenen Ausführungsbeispiele beschränkt, die auf vielfache Weise abgewandelt werden können. Dies gilt vor allem für die Form, Zahl und Anordnung der verschiedenen, als Widerhaken wirksamen Zähne und Kanten. Weiter ist für den Fachmann klar, daß die beschriebenen Vorrichtungen analog zu EP 0 477 713 B1 auch zur Befestigung eines rohrförmigen Bauteils, z.B. eines Rohrs, an einem plattenförmigen Bauteil, z.B. an einer Rosette verwendet werden können. Bei der Ausführungsform nach Fig. 9 wäre es z.B. möglich, die Hülse 30 bzw. deren Abschnitte 30a,30b anstatt mit den Anschlagelementen 36 mit den aneinander zugeordneten Abschnitten eines an einer Wand oder dergleichen befestigbaren Rosettenunterteils zu versehen und in diesen Abschnitten Schraublöcher oder dergleichen für Befestigungsschrauben auszubilden. In diesem Fall würde die Hülse 30 somit einen integralen Bestandteil eines Rosettemmterteils bilden. Außerdem können die beschriebenen Vorrichtungen auch zur Verbindung/Befestigung von anderen als rohrförmigen Bauteilen verwendet werden. Schließlich versteht sich, daß die einzelnen Merkmale auch in anderen als den dargestellten und beschriebenen Kombinationen angewendet werden können.

## Patentansprüche

1. Vorrichtung zum Befestigen oder Verbinden von Bauteilen, die wenigstens ein Anschlußende (1) mit einer von einer Wand (2) begrenzten Aufnahmeöffnung (3) aufweisen, enthaltend eine zum Einführen in die Aufnahmeöffnung (3) bestimmte Hülse (17, 30, 44) mit einem im wesentlichen dem Innenquerschnitt der Aufnahmeöffnung (3) entsprechenden Außenquerschnitt und einem zum Einschrauben eines Gewindebolzens (8) bestimmten Innengewindeteil, dadurch gekennzeichnet, daß die Hülse (17, 30, 44) wenigstens eine radial angeordnete Aussparung (18, 31, 47) aufweist, in die ein Verriegelungselement (21, 33, 48) lose eingesetzt ist, das wenigstens einen über den Außenquerschnitt der Hülse (17, 30, 44) radial nach außen abstehenden, zum Eingraben in die Wand (2) bestimmten Widerhaken (25, 32a, 48a) enthält, der beim Festziehen des Gewindebolzens (8) in einer zur Richtung der Einführung entgegengesetzten Richtung wirksam wird.

2. Vorrichtung nach Anspruch 1, dadurch gekennzeichnet, daß die Widerhaken (25, 32a, 48a) in Einführungsrichtung der Hülse (17, 30, 44) federnd nachgiebig ausgebildet sind.

3. Vorrichtung nach Anspruch 1 oder 2, dadurch gekennzeichnet, daß das Verriegelungselement ein schwenkbar in der Aussparung (18) gelagerter Zahnkeil (21) ist, der an seiner radial außen liegenden Seite wenigstens einen, den Widerhaken bildenden, ersten Zahn (25) aufweist.

4. Vorrichtung nach Anspruch 3, dadurch gekennzeichnet, daß der Zahnkeil (21) zwischen zwei federnd ausgebildeten, an der Hülse (17) angebrachten Schenkeln (19, 20) schwenkbar gelagert ist.

5. Vorrichtung nach Anspruch 1 oder 2, dadurch gekennzeichnet, daß das Verriegelungselement eine in die Aussparung (31) eingesetzte Tellerfeder (33) ist und der Widerhaken (32a) an wenigstens einem radial nach außen ragenden Segment (32) der Tellerfeder (33) angeordnet ist.

6. Vorrichtung nach Anspruch 5, dadurch gekennzeichnet, daß die Aussparung aus einem das Segment (32) aufnehmenden radialen Schlitz (31) besteht.

7. Vorrichtung nach Anspruch 5 oder 6, dadurch gekennzeichnet, daß die Hülse (30) zwei den Schlitz (31) bildende Abschnitte (30a, 30b) enthält, die im wesentlichen längs einer quer zu ihrer Längsachse verlaufenden Fläche getrennt sind.

8. Vorrichtung nach Anspruch 1 oder 2, dadurch gekennzeichnet, daß das Verriegelungselement eine in die Aussparung (47) eingesetzte Blattfeder (48) ist und die Widerhaken durch seitlich aus der Hülse (44) herausragende Enden (48a) der Blattfeder (48) gebildet sind.

9. Vorrichtung nach einem der Ansprüche 1, 4 oder 8, dadurch gekennzeichnet, daß die Hülse (17, 44) wenigstens zwei Abschnitte (17a, 17b; 44a, 44b) aufweist, die im wesentlichen längs einer parallel zu ihrer Längsachse angeordneten Fläche getrennt sind.

10. Vorrichtung nach einem der Ansprüche 1 bis 9, dadurch gekennzeichnet, daß das limengewindeteil der Hülse (17, 30, 44) in Fügerichtung des Bolzens (8) federnd nachgiebig ausgebildet ist.

11. Vorrichtung nach Anspruch 10, dadurch gekennzeichnet, daß das Innengewindeteil durch wenigstens einen auf der Innenseite des Zahnkeils (21) angebrachten, zweiten Zahn (26) gebildet ist.

12. Vorrichtung nach Anspruch 10, dadurch gekennzeichnet, daß die Tellerfeder (33) ein Mittelloch (40) aufweist und das Innengewindeteil durch radial in das Mittelloch (40) ragende Lappen (41) der Tellerfeder (33) gebildet ist.

13. Vorrichtung nach Anspruch 10, dadurch gekennzeichnet, daß das Innengewindeteil durch eine in der Hülse (44) angeordnete Klappmutter (50) gebildet ist.

14. Vorrichtung nach Anspruch 13, dadurch gekennzeichnet, daß die Klappmutter (50) durch eine Feder (51) vorgespannt ist.

15. Vorrichtung nach einem der Ansprüche 1 bis 14, dadurch gekennzeichnet, daß die Hülse (17, 30, 44) an einem Ende mit einem ersten, zur Anlage an ein stirnseitiges Ende (4) der Aufnahmeöffnung (3) bestimmten, äußeren Anschlagelement (27; 36, 39; 45) versehen ist.

16. Vorrichtung nach einem der Ansprüche 1 bis 15, dadurch gekennzeichnet, daß die Hülse (17, 30, 44) mit einem zweiten, zur Anlage des Gewindebolzens (8) bestimmten, inneren Anschlagelement (28, 46) versehen ist.

17. Vorrichtung zum Befestigen oder Verbinden von Bauteilen, die wenigstens ein Anschlußende (1) mit einer von einer Wand (2) begrenzten Aufnahmeöffnung (3) aufweisen, enthaltend eine zum Einführen in die Aufnahmeöffnung (3) bestimmte Hülse (17, 30, 44) mit einem Innengewindeteil und einen zum Einschrauben in das Innengewindeteil bestimmten Gewindebolzen (8), dadurch gekennzeichnet, daß das Innengewindeteil in Fügerichtung des Gewindebolzens (8) federnd nachgiebig ausgebildet ist.

18. Vorrichtung nach Anspruch 17, dadurch gekennzeichnet, daß die Hülse (17, 30, 44) nach wenigstens einem der Ansprüche 1 bis 9 und 11 bis 16 ausgebildet ist.
